# EUROPEAN PATENT SPECIFICATION

(11) **EP 2 734 690 B1**
(45) Date of publication and mention of the grant of the patent: **06.05.2015**
(21) Application number: 12731500.0
(22) Date of filing: 06.07.2012
(51) Int. Cl.: E04H 12/20, A01G 17/06

(54) **Guy device for a pole driven into the ground**
Verankerungsvorrichtung für einen in den Boden eingetriebenen Mast
Dispositif d'amarrage pour un piquet enfoncé dans le sol

(30) Priority: 19.07.2011 IT PN20110053
(43) Date of publication of application: 28.05.2014
(73) Proprietor: Mollificio Bortolussi S.R.L., 33080 Fiume Veneto (IT)
(72) Inventor: BORTOLUSSI, Claudio, I-33080 Fiume Veneto (Pordenone) (IT); BORTOLUSSI, Franco, I-33080 Fiume Veneto (Pordenone) (IT)
(74) Representative: Giugni, Valter
(86) International application number: PCT/EP2012/063275
(87) International publication number: WO 2013/010824

(56) References cited:
- FR-A- 334 911
- GB-A- 476 105
- US-A- 2 736 398
- US-A- 5 199 214

## Description

### TECHNICAL FIELD OF THE INVENTION

The present invention relates to a guy device for a pole driven into the ground, and it is applicable particularly in the agricultural industry activity whenever it is necessary to anchor to the ground a support pole for plants, for tall trees as well.

### BACKGROUND OF THE INVENTION

The use for guy devices for poles driven into the ground has been known for a long time. Patent US 936,824 describes a device basically comprising an anchoring member deeply driven into the ground, a first rod or metal cable whose lower end is hinged to the anchoring member and whose upper end is connected through a second rod or metal cable to the pole to be guyed. The second rod or metal cable is provided with means in order to adjust the connecting tension.

With specific reference to the agricultural industry, it is known the use of devices in order to guy single plants so as to ensure their vertical correct growth. For example, patents US 6,301,830 and US 6,389,743 describe this type of devices comprising tension rods provided with tensioning elements connecting the plant to the anchoring member driven into the ground.

Devices such as those previously described are, in particular, applicable to the terminal poles of rows of vine-growing plants or fruit-bearing plants, and to fencing poles in general as well.

The known devices for this kind of use, generally utilize tension rods formed of metal rods, or of twisted steel ropes or of galvanized iron wires, which however have a limited life or require a specific and rather expensive processing.

Alternatively, cables having a very large diameter can be used still anchored to rigid members deeply driven into the ground. In each case the cable ends have to be folded so as to form hooking eyelets, which still require tightening means for the same. The closing of the eyelets at the cable ends is normally made through bushings suitably pressed, for example caulked. US 2 736 398 discloses a guy device with the features of the preamble of claim 1.

The most serious problem, besides those already described, met when using these guy devices is that of their limited strength when the tensile stresses reach values sensibly high. Moreover it is not possible to exploit completely the mechanical characteristics of the wires forming the cable.

In fact, cable breaking or slipping can easily occur particularly in correspondence with the eyelet tightening points.

### SUMMARY OF THE INVENTION

The main object of the invention is that of providing a guy device for a pole driven into the ground, in particular the terminal pole of a row of a vine-growing plant, which can bear, without breaking, the high stresses it can undergo when working.

A further object of the invention is that of providing a guy device for a support pole, in particular the terminal pole of a row of vine-growing plant, the device being made of a simple metal wire, preferably of steel, or natural material such as hemp, or synthetic, such as polyester, with a reduced diameter compared to the diameter of the rods and the cables used in the prior art, but such as to balance the loads the support pole has to bear, so that its application is easier and more rational.

Yet another object is that of providing a guy device for a support pole, in particular the terminal pole of a row of vine-growing plant made of wire or a cable of a reduced diameter, which is folded and suitably knotted so as to avoid any slipping chance.

These and other objects are achieved with the device according to the invention whose characteristics are specified in claim 1 concluding the present patent.

### BRIEF DESCRIPTION OF THE DRAWINGS

Advantages and details of the invention will be apparent from the following description for exemplification only but not limited to, with reference to the appended drawings wherein:
- figure 1 schematically shows a pole driven into the ground and provided with the guy device according to the invention,
- figure 2 shows an example of the guy device according to the invention, as applied to the pole in fig. 1,
- figures 3 and 4 show respective details of the guy device according to the invention.

### DETAILED DESCRIPTION OF THE INVENTION

The device according to the invention is described as an example, with reference to the guying of a terminal pole for a vine-growing plant.

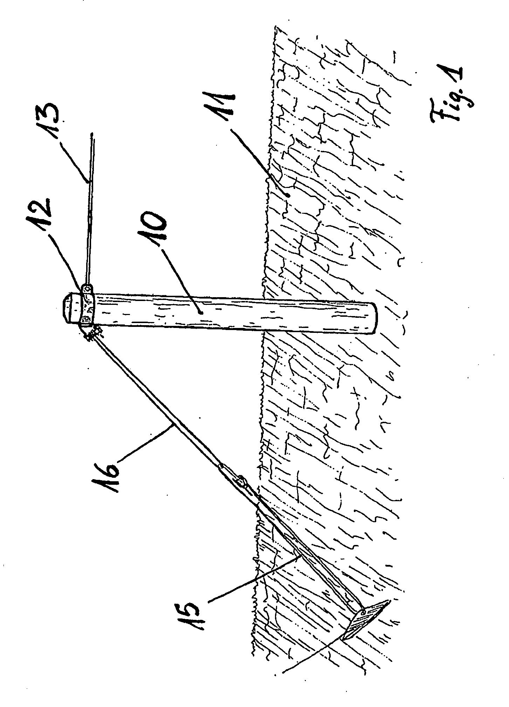

Figure 1 shows schematically a pole 10, which is vertically driven into the ground 11; anyway, pole 10 can also be driven into the ground with a different inclination, according to the operating needs.

In the proximity of the upper end of pole 10 is mounted a clamp or a collar 12, normally of metal, to which the wire or wires 13 supporting the plants are fixed (for simplicity only one wire is shown).

To the same clamp or collar 12 is connected the guy device according to the invention substantially comprising an anchoring member 14 driven deeply into the ground, a connecting member 15 whose lower end is hooked to the anchoring member 14 and whose upper end is connected through a tensioning element 16 to the pole 10 to be guyed.

The anchoring member 14 is of the known type, such as a cement or heavy metal plate, which is driven into the ground through digging, or a section bar deeply driven into the ground using suitable tools.

The characteristic of the device according to the invention consists in the particular making of the connecting member 15 and of the tensioning member 16, as well as in the way of reciprocally hooking said members.

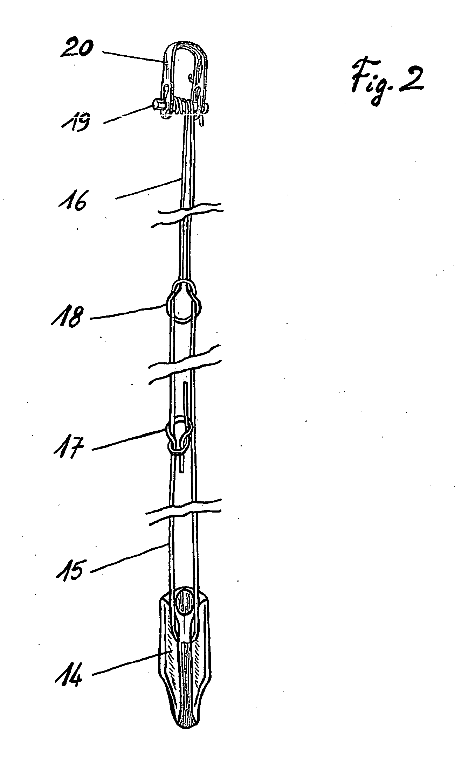

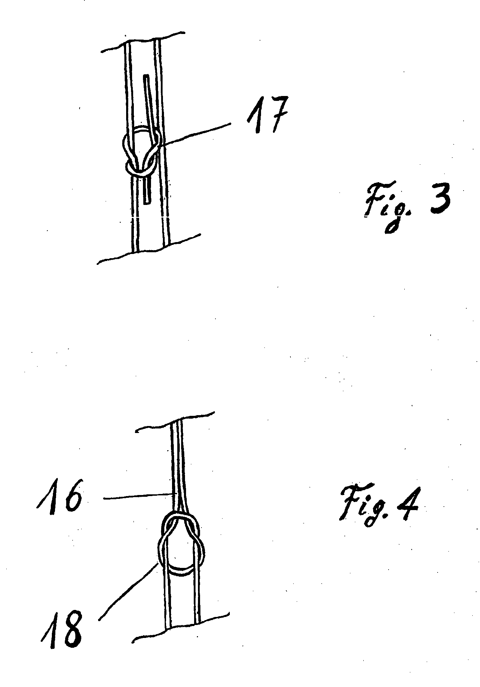

The connecting member 15 (figs 2 and 3) is formed by a metal wire, preferably of steel, or equivalent material, as far as the tensile strength is concerned, which is caused to pass through a suitable seat (not shown) obtained in the anchoring element 14 and which is folded so as to form an elongated annular element. When a cement or metal plate is used as anchoring member 14, the metal wire 15 will be made pass around a pin suitably tied to the plate, as it is known to those skilled in the art. The annular element thus formed is closed knotting the wire ends. The knot 17 is preferably a "reef knot" which prevents their slipping off under load conditions.

Similarly, the tensioning member 16 is formed of a metal wire with the same characteristics of the wire forming the connecting member 15. Also the wire of the tensioning member 16 is folded so as to form an elongated annular element, whose lower end is engaged with the upper end of the connecting member 15 through a reef knot 18 (figs. 2 and 4). This solution is preferable to a simple hooking because it is possible to avoid too tight radiuses of curvature of the wire, which could hinder its tensile strength under load.

The two ends of the wire forming the tensioning member 16 of the guy device according to the invention are respectively hooked to the tensioning means 19 such as an adjusting rotating roller (fig.2).

In turn, the tensioning roller 19 is connected to the pole 10 to be guyed through a hooking bracket 20 or any other means known in the field of agricultural plants.

The device according to the invention makes it possible to reach all the expected purposes, simplifying both its construction and its use but ensuring the best functionality.

In particular, the use of a wire or metal cable, or of equivalent material, folded and annularly closed

For both the connecting member 15 and the tensioning member 16 enables to increase the tensile strength of the guy device being the wire section the same.

In particular, the annular closing of the connecting member and the engagement between the connecting member and the tensioning member, both made through reef knots, avoids the pressing of the wires in use and consequently avoids their slipping or breaking.

## Claims

1. Guy device for a pole driven into the ground, particularly a support pole (10) for vine-growing plants, comprising an anchoring member (14) deeply driven into the ground, a connecting member (15) whose lower end is hooked to the anchoring member (14) and whose upper end is connected through a tensioning member (16) to the pole to be guyed,
both the connecting member (15) and the tensioning member (16) are a wire or a cable made of metal or equivalent material, folded as to form closed annular elements, the wire forming the connecting member (15) passing through a seat obtained in the anchoring member (14) **characterized in that**, the wire forming the connecting member (15) having the ends reciprocally knotted, and the tensioning member (16) being hooked to the connecting member (15).

2. Guy device for a pole driven into the ground according to claim 1, **characterized in that** the ends of the wire forming the connecting member (15) are tied with a reef knot as to prevent them from slipping off under load conditions.

3. Guy device for a pole driven into the ground according to claim 1, **characterized in that** the annular folded upper end of the connecting member (15) and the annular folded lower end of the tensioning member (16) are reciprocally engaged through a reef knot (18).

4. Guy device for a pole driven into the ground according to claim 1, **characterized in that** the ends of the tensioning member (16) are hooked to tensioning means (19), such as an adjusting rotating roller, through which the tensioning member (16) is connected to the pole (10) to be guyed.

## Patentansprüche

1. Abspannvorrichtung für einen in den Boden getriebenen Pfahl, insbesondere einen Stützpfahl (10) für Weinbau-Pflanzen, die ein Verankerungselement (14), das tief in den Boden getrieben ist, sowie ein Verbindungselement (15) umfasst, dessen unteres Ende an dem Verankerungselement (14) eingehakt ist und dessen oberes Ende über ein Spannelement (16) mit dem abzuspannenden Pfahl verbunden ist,
wobei sowohl das Verbindungselement (15) als auch das Spannelement (16) ein Draht oder ein Kabel ist, das aus Metall oder gleichwertigem Material besteht, so gebogen ist, dass es geschlossene ringförmige Elemente bildet, und der Draht, der das Verbindungselement (15) bildet, durch eine Aufnahme hindurchtritt, die in dem Verankerungselement (14) vorhanden ist, **dadurch gekennzeichnet, dass** die Enden des Drahtes, der das Verbindungselement (15) bildet, miteinander verknotet sind und das Spannelement (16) an dem Verbindungselement (15) eingehakt ist.

2. Abspannvorrichtung für einen in den Boden getriebenen Pfahl nach Anspruch 1, **dadurch gekennzeichnet, dass** die Enden des Drahtes, der das Verbindungselement (15) bildet, mit einem Kreuzknoten festgebunden sind, um zu verhindern, dass sie unter Lastbedingungen herausrutschen.

3. Abspannvorrichtung für einen in den Boden getriebenen Pfahl nach Anspruch 1, **dadurch gekennzeichnet, dass** das ringförmige gebogene obere Ende des Verbindungselementes (15) und das ringförmige gebogene untere Ende des Spannelementes (16) über einen Kreuzknoten (18) miteinander in Eingriff sind.

4. Abspannvorrichtung für einen in den Boden getriebenen Pfahl nach Anspruch 1, **dadurch gekennzeichnet, dass** die Enden des Spannelementes (16) an einer Spanneinrichtung (19), wie beispielsweise einer Einstell-Drehwalze, eingehakt sind, über die das Spannelement (16) mit dem abzuspannenden Pfahl (10) verbunden ist.

## Revendications

1. Dispositif d'amarrage pour un piquet enfoncé dans le sol, en particulier pour un tuteur (10) de viticulture, comprenant un élément d'ancrage (14) profondément enfoncé dans le sol, un élément de raccordement (15) dont l'extrémité inférieure est accrochée à l'élément d'ancrage (14) et dont l'extrémité supérieure est reliée au piquet à amarrer par l'intermédiaire d'un élément de tension (16), l'élément de raccordement (15) ainsi que l'élément de tension (16) sont faits d'un fil ou d'un câble métallique ou d'un matériau équivalent plié de façon à former des éléments annulaires fermés, le fil de l'élément de raccordement (15) traversant un support ménagé dans l'élément d'ancrage (14) **caractérisé en ce que** le fil de l'élément de raccordement (15) a les extrémités mutuellement attachées, et l'élément de tension (16) est accroché à l'élément de raccordement (15).

2. Dispositif d'amarrage pour un piquet enfoncé dans le sol selon la revendication 1, **caractérisé en ce que** les extrémités du fil formant l'élément de raccordement (15) sont immobilisées avec un noeud plat de manière à les empêcher de glisser dans des conditions de charge.

3. Dispositif d'amarrage pour un piquet enfoncé dans le sol selon la revendication 1, **caractérisé en ce que** l'extrémité supérieure annulaire pliée de l'élément de raccordement (15) et l'extrémité inférieure annulaire repliée de l'élément de tension (16) sont mutuellement engagés à travers un noeud plat (18).

4. Dispositif d'amarrage pour un piquet enfoncé dans le sol selon la revendication 1, **caractérisé en ce que** les extrémités de l'élément de tension (16) sont accrochées à des moyens de tension (19), tel qu'un rouleau de réglage rotatif, à travers lequel l'élément de tension (16) est relié au piquet (10) à amarrer.
